# EUROPÄISCHE PATENTSCHRIFT

(11) **EP 1 560 797 B1**
(45) Veröffentlichungstag und Bekanntmachung des Hinweises auf die Patenterteilung: **17.12.2008**
(21) Anmeldenummer: 03770959.9
(22) Anmeldetag: 07.10.2003
(51) Int. Cl.: C03C 17/36

(54) **MIT EINER WÄRMESCHUTZSCHICHT BESCHICHTETES SUBSTRAT UND VERFAHREN ZUM AUFBRINGEN DER WÄRMESCHUTZCHICHT**
SUBSTRATE COVERED WITH A THERMAL INSULATION LAYER AND METHOD FOR EXTENDING SAID THERMAL INSULATION LAYER
SUBSTRAT RECOUVERT D'UNE COUCHE D'ISOLATION THERMIQUE ET PROCEDE POUR ETENDRE LA COUCHE D'ISOLATION THERMIQUE

(30) Priorität: 08.11.2002 DE 10252101
(43) Veröffentlichungstag der Anmeldung: 10.08.2005
(73) Patentinhaber: INTERPANE Entwicklungs- und Beratungsgesellschaft mbH & Co. KG, D-37697 Lauenförde (DE)
(72) Erfinder: LANDGRAF, Ralf, 94579 Zenting (DE); BÖWER, Reimund, 37688 Beverungen (DE); MÖNNEKES, Jörg, 37671 Höxter (DE)
(74) Vertreter: Körfer, Thomas
(86) Internationale Anmeldenummer: PCT/EP2003/011081
(87) Internationale Veröffentlichungsnummer: WO 2004/041742

(56) Entgegenhaltungen:
- EP-A- 1 044 934
- DE-A- 2 854 213
- US-A- 5 153 054
- US-A- 5 837 361

## Beschreibung

Die Erfindung betrifft ein mit einer Wärmeschutzschicht beschichtetes Substrat sowie ein Verfahren zur Herstellung der Wärmeschutzschicht.

Wärmeschutzsysteme haben in den letzten Jahren eine immer größere Bedeutung erlangt. Um beim Realisieren einer verbesserten Isolation die gestalterischen Freiheiten nicht allzu weit einzuschränken, ist es daher von besonderer Wichtigkeit, auch im Bereich der Verglasung eine verbesserte Wärmeisolierung zu erreichen. Zu diesem Zweck wurden Wärmeschutzverglasungen entwickelt, welche zumeist einseitig mit einer metallischen Schicht versehen sind, die als Reflektor für Wärmestrahlung (λ= 10µm) wirkt, im Folgenden kurz als Infrarotreflektor bezeichnet. Um eine möglichst große Transmission bei geringer Reflexion der Wärmeschutzverglasung zu erreichen, ist auf dem Glassubstrat zunächst eine dielektrische Schicht angeordnet. Auf dieser dielektrischen Schicht ist die infrarotreflektierende Metallschicht angeordnet. Auf der Metallschicht ist eine weitere dielektrische Antireflexionsschicht aufgebracht.

Eine solche Beschichtung ist beispielsweise aus der EP 0 275 474 A1 bekannt. Die infrarotreflektierende Schicht wird aus einer dünnen Schicht Silber gebildet, welche symmetrisch zwischen zwei Zinkstannatschichten angeordnet ist. Das Schichtsystem ist auf einer Scheibe aus Flachglas aufgebracht, wobei zwischen der Silberschicht und der von der Glasseite abgewandten Zinkstannatschicht eine Haftschicht angeordnet ist, welche aus Titan oder Titanoxid besteht. Um die Beständigkeit, insbesondere beim Weiterverarbeiten des beschichteten Glases zu verbessern, ist zusätzlich eine Titanoxidschicht auf der von dem Substrat abgewandten Seite der Beschichtung angeordnet.

Das beschriebene Schichtsystem hat den Nachteil, daß zu beiden Seiten des Silbers eine Schicht mit nahezu gleichem Brechungsindex vorhanden ist, wobei Unterschiede durch die Prozeßtechnik bedingt sind. Eine neutrale Farbwiedergabe ist dagegen am besten durch ein Schichtsystem zu erzielen, bei dem die untere dielektrische Schicht einen höheren Brechungsindex aufweist als die obere dielektrische Schicht. Ein entsprechender Vorschlag wird in der DE 38 07 600 C2 gemacht. Mit der Beständigkeit der Zinkstannatschicht wird also ein Kompromiß hinsichtlich der optischen Eigenschaften der dielektrischen Unterschicht eingegangen.

Es ist die Aufgabe der Erfindung, ein mit einer Wärmeschutzschicht beschichtetes Substrat und ein Verfahren zu dessen Herstellung sowie eine Wärmeschutzverglasung zu schaffen, welches eine Verbesserung der Farbwiedergabe, sowie der lichttechnischen Eigenschaften ermöglicht.

Die Aufgabe wird durch das erfindungsgemäß mit einer Wärmeschutzschicht beschichtete Substrat gemäß Anspruch 1 bzw. das Verfahren zur Herstellung eines solchen Schichtsystems nach Anspruch 15 und die Wärmeschutzverglasung nach Anspruch 14 gelöst.

Das erfindungsgemäß beschichtete Substrat hat den Vorteil, daß durch die Verwendung zweier unterschiedlicher Lagen als dielektrische Unterschicht, welche zwischen dem Glassubstrat und einer Silberschicht als infrarotreflektierender Schicht angeordnet ist, ein verringerter Schichtwiderstand realisiert werden kann, bei gleichzeitig geringer Silberschichtdicke. Ein Schichtstapel mit einer sehr gut infrarotreflektierenden Metallschicht bei geringer Schichtdicke besitzt in der Kombination mit einer dielektrischen Unterschicht, deren Brechungsindex höher ist als der Brechungsindex der dielektrischen Oberschicht, eine sehr neutrale Farbwiedergabe.

In den Unteransprüchen sind vorteilhafte Weiterbildungen des mit einer Wärmeschutzschicht beschichteten Substrats sowie des Herstellungsverfahrens angegeben.

Insbesondere ist von Vorteil, daß der Schichtwiderstand bzw. die Emissivität deutlich verbessert sind, wenn eine Zinkoxidschicht in der dielektrischen Unterschicht verwendet wird, wobei die Zinkoxidschicht unmittelbar an die metallische Schicht angrenzt. Dieser Vorteil läßt sich noch dadurch verstärken, daß die Zinkoxidschicht mit einem Mischtarget erzeugt wird. Besonders vorteilhaft ist die Verwendung eines Mischtargets aus den Oxiden von Zink und einer Dotierung, vorzugsweise Aluminiumoxid, wobei die Oxide etwas unterstöchiometrisch sind. Werden Zinktargets verwendet, so sind diese generell mit ca. 2 % Aluminium dotiert.

Ausführungsbeispiele des erfindungsgemäß beschichteten Substrats sind in der Zeichnung dargestellt und werden in der nachfolgenden Beschreibung näher erläutert. Es zeigen:
- Fig. 1: ein erstes Ausführungsbeispiel eines mit einer erfindungsgemäßen Wärmeschutzschicht beschichteten Substrats;
- Fig. 2: ein zweites Ausführungsbeispiel eines mit einer erfindungsgemäßen Wärmeschutzschicht beschichteten Substrats;
- Fig. 3: eine schematische Darstellung einer Wärmeschutzverglasung mit einer erfindungsgemäßen Wärmeschutzschicht; und
- Fig. 4: einen beispielhaften Verlauf der Absorption und der Transmission für eine erfindungsgemäße Wärmeschutzschicht.

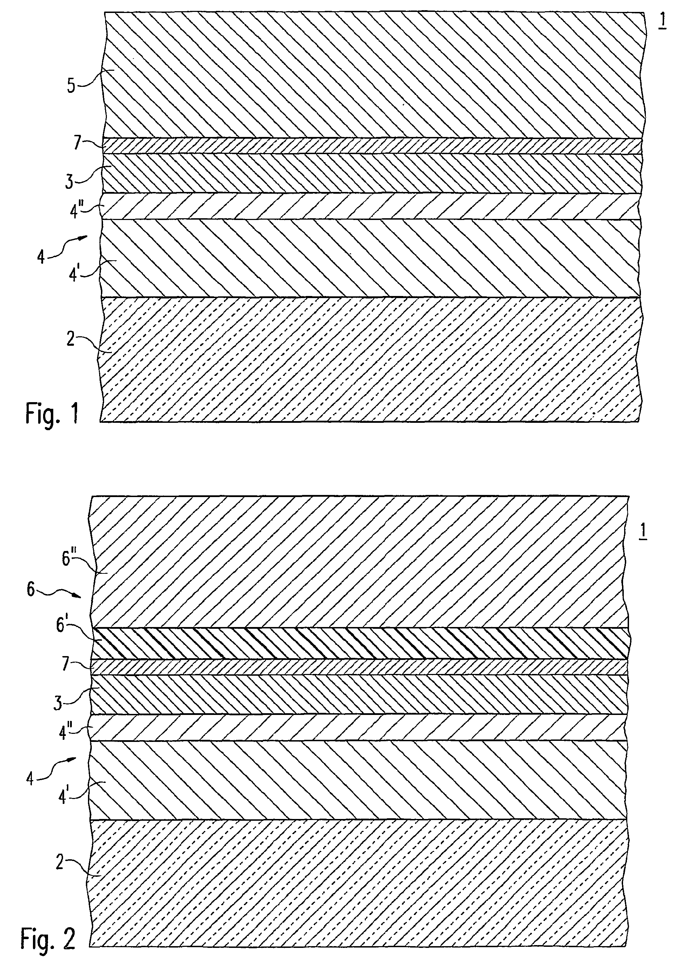

In Fig. 1 ist ein erstes Ausführungsbeispiel der erfindungsgemäßen Wärmeschutzschicht dargestellt, wobei die Wärmeschutzschicht 1 auf einem Substrat 2 vorzugsweise durch mehrere aufeinanderfolgende Sputtervorgänge aufgebracht wird. Zum Erreichen einer möglichst niedrigen Emissivität ε ist auf dem Substrat 2, welches beispielsweise ein Flachglas sein kann, eine metallische Schicht 3 aufgebracht. Die metallische Schicht 3, die vorzugsweise aus Silber besteht, ist dabei zwischen einer dielektrischen Unterschicht 4 und einer dielektrischen Oberschicht 5 angeordnet. Die dielektrische Unterschicht 4 sowie die dielektrische Oberschicht 5 sind antireflektierende Schichten, durch welche eine hohe Transmission des beschichteten Substrats 2 im sichtbaren Bereich erreicht wird.

Bei dem erfindungsgemäßen Schichtsystem besteht die dielektrische Unterschicht 4 aus einer ersten Lage 4' sowie einer zweiten Lage 4''. Als erste Lage 4' ist unmittelbar auf dem Glassubstrat bevorzugt eine Wismutoxidschicht aufgebracht. Die Lage Wismutoxid besitzt eine Dicke von 5 bis 50 nm, und wird in einer reaktiven, d. h. sauerstoffhaltigen Atmosphäre aufgesputtert. Das verwendete Target enthält neben dem Wismut einen Anteil Mangan. Die Schichtdicke ist bevorzugt zwischen 10 nm und 40 nm, besonders bevorzugt zwischen 15 nm und 25 nm.

Auf diese erste Lage 4' der dielektrischen Unterschicht 4 bevorzugt aus Wismutoxid wird eine zweite Lage 4'' der dielektrischen Unterschicht 4 aufgebracht, welche bevorzugt aus Zinkoxid besteht. Das Mischtarget enthält bevorzugt Zinkoxid und Aluminiumoxid (ZnOₓ, Al₂O₃). Die Verwendung eines solchen Mischtargets führt zu einer Verringerung des Schichtwiderstandes und damit zu einer Verringerung der Emissivität ε. Die Schichtdicke des aufgebrachten Zinkoxids liegt zwischen 1 nm und 15 nm, bevorzugt zwischen 4 nm und 11 nm, besonders bevorzugt zwischen 5 nm und 8 nm. Eine besonders günstige Anordnung ergibt sich bei einer Gesamtschichtdicke der dielektrischen Unterschicht von 26 nm, mit einer ersten Lage 4' von 20 nm und einer zweiten Lage 4'' mit 6 nm.

Nach dem Aufsputtern der dielektrischen Unterschicht 4 folgt eine Schicht 3 aus einem Metall, wobei vorzugsweise eine Silberschicht aufgebracht wird. Die Silberschicht hat eine bevorzugte Dicke von 5 nm bis 15 nm, wobei sich als besonders geeignete Schichtdicke eine Dicke von 9 nm insbesondere im Zusammenhang mit der besonders bevorzugten Schichtdicke von 26 nm der dielektrischen Unterschicht 4 erwiesen hat.

Auf der von dem Substrat 2 abgewandten Seite der metallischen Schicht 3 ist eine dielektrische Oberschicht 5 vorgesehen. Die dielektrische Oberschicht 5 besteht im einfachsten Fall aus einer Zinkoxidschicht, wobei zwischen der dielektrischen Oberschicht 5 und der metallischen Schicht 3 eine Blocker- oder Haftschicht 7, z.B. aus Titanoxid, angeordnet ist. Besteht die dielektrische Oberschicht 5 ausschließlich aus einer Zinkoxidschicht, so weist die dielektrische Oberschicht 5 vorzugsweise eine Dicke von 10 nm bis 70 nm auf, bevorzugt eine Dicke von 20 nm bis 60 nm, besonders bevorzugt eine Dicke von 30 nm bis 50 nm. In dem beispielhaft dargestellten Aufbau der Wärmeschutzschicht stellt sich eine Dicke von 40 nm als besonders günstig heraus.

Die Zusammensetzung der einzelnen Lagen können in allen Schichten von den stöchiometrisch exakten Verhältnissen für Wismutoxid, Zinkoxid, Zinnoxid und Zinkstannat abweichen. Anstelle der Oxide können auch entsprechende Nitride oder oxynitride auftreten, wenn im Prozeß Sticksoff bzw. ein Gemisch aus Sauerstoff und Stickstoff als Reaktivsgas eingesetzt wird.

Ein zweites Ausführungsbeispiel ist in der Fig. 2 dargestellt. Die Wärmeschutzschicht ist wiederum auf einem Substrat 2 aufgebracht, welches vorzugsweise aus Flachglas besteht, und weist eine metallische Schicht 3 auf, welche auf einer dielektrischen Unterschicht 4 aufgebracht ist, die aus einer ersten Lage 4' und einer zweiten Lage 4'' besteht. Die erste Lage 4' und die zweite Lage 4'' sind in ihrem Aufbau mit der ersten Lage 4' und der zweiten Lage 4'' aus Fig. 1 identisch und werden auch mit denselben Verfahren aufgebracht. Auf der von dem Substrat 2 abgewandten Seite der metallischen Schicht 3 ist eine dielektrische Oberschicht 6 aufgebracht, welche aus einer ersten Lage 6' sowie einer zweiten Lage 6' ' besteht. Die erste Lage 6' entspricht in ihrem Aufbau sowie bezüglich des Verfahrens zum Abscheiden der dielektrischen Oberschicht 5 dem Beispiel aus Fig. 1. Zusätzlich ist jedoch eine zweite Lage 6'' aufgebracht, welche Zinkstannat enthält. Das Zinkoxid der ersten Lage 6'·der dielektrischen Oberschicht 6 hat eine Dicke von 1 nm bis 15 nm, bevorzugt eine Dicke von 4 nm bis 12 nm, besonders bevorzugt eine Dicke von 5 nm bis 9 nm. Das Zinkstannat der zweiten Lage 6'' der dielektrischen Oberschicht 6 hat eine Dicke von 10 nm bis 70 nm, bevorzugt eine Dicke von 20 nm bis 60 nm, besonders bevorzugt eine Dicke von 30 nm bis 50 nm.

Zur Verbesserung der Haftung der dielektrischen Oberschicht 6 ist zwischen der metallischen Schicht 3 und der dielektrischen Oberschicht 6 eine Haftschicht 7 angeordnet. Die Haftschicht 7 besteht vorzugsweise aus Titanoxid und hat vorzugsweise eine Dicke zwischen 1 nm und 5 nm, wobei hinsichtlich einer optimierten Transmission im sichtbaren Bereich des Lichts eine Schichtdicke von 2 nm besonders bevorzugt wird.

In einem bevorzugten Ausführungsbeispiel ist die Gesamtschichtdicke der dielektrischen Oberschicht 6 48 nm, wobei für die erste Lage 6', die aus Zinkoxid besteht, eine Schichtdicke von 8 nm vorgesehen ist, und für die abschließende Zinkstannatschicht eine Dicke von 40 nm.

Als Alternative zu dem in den Ausführungsbeispielen angegebenen Wismutoxid kann auch Wolframoxid in dem Schichtaufbau verwendet werden. Die Verwendung von Zinkstannat, erzeugt eine Oberschicht, welche hinsichtlich der Beständigkeit hervorragende Eigenschaften aufweist, so daß auf eine zusätzliche Schutzschicht verzichtet werden kann. Darüber hinaus ist das Schichtsystem im Randbereich des Substrats 2 gut abschleifbar, so daß eine Befreiung des Substrats 2 von der Wärmeschutzschicht zum Verbauen der Substrate zu einer Wärmeschutzverglasung möglich ist.

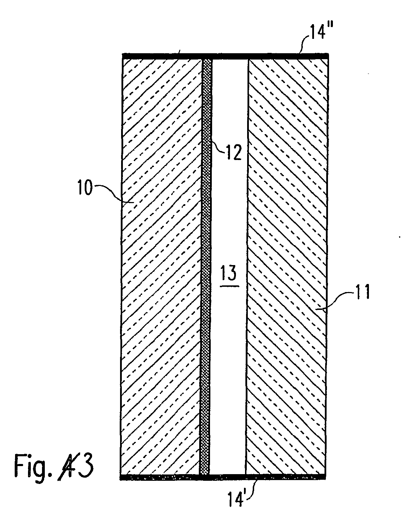

Eine Wärmeschutzverglasung, welche aus mehreren Flachgläsern zusammengesetzt ist, ist in Fig. 3 schematisch dargestellt. Das dargestellte Ausführungsbeispiel weist eine erste Scheibe 10 und eine zweite Scheibe 11 auf, die miteinander verbunden sind, wobei die Verbindung durch die schwarz dargestellten Randelemente 14 und 14' angedeutet ist. Auf der der zweiten Scheibe 11 zugewandten Seite der ersten Scheibe 10 ist die erfindungsgemäße Wärmeschutzschicht 12 aufgebracht. Zwischen der ersten Scheibe 10 und der zweiten Scheibe 11 ist ein Raum 13 ausgebildet, welcher mit einem Inertgas gefüllt sein kann.

Die beschichtete Scheibe weist dabei eine Lichttransmission τ_{L} gemessen nach DIN 67507 im sichtbaren Wellenlängenbereich von mindestens 88 % auf. Das beschriebene Wärmeschutzschichtsystem weist eine Lichttransmission τ_{L} von mehr als 79% im sichtbaren Bereich des Lichts auf. Gleichzeitig wird ein Farbwiedergabeindex R_{a,D} von ≥ 97 bzw. R_{a,R} von ebenfalls ≥ 97 erreicht. Die Emissivität εₙ bleibt dabei unterhalb von 0,06.

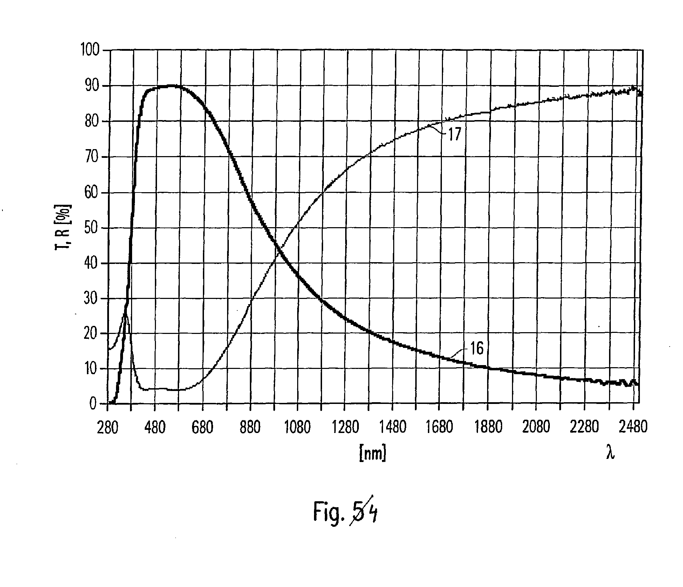

Ein Beispiel für einen Verlauf 16 der Transmission T und einen Verlauf 17 der Reflexion R an einer Wärmeschutzschicht 1 mit dem Schichtaufbau des Ausführungsbeispiels aus Fig. 1 (Floatglas/BiOₓ/ZnOₓ:AlOₓ /Ag/TiOₓ/Znoₓ:AlOₓ) ist in Fig. 4 dargestellt. Die Transmission T und die Reflexion R sind über der Wellenlänge aufgetragen und in Prozent angegeben. Gut zu erkennen ist dabei die geringe Reflexion im sichtbaren Bereich des Lichts. Das Substrat hat dabei selbst eine Absorption von etwa 2%, so daß nur ca. 5% Absorption in der Schicht auftreten, wobei die Emissivität εₙ immer kleiner als 0,06 bleibt.

Auf die beschriebenen Schichtstapel kann eine weitere Schicht aufgetragen werden, vorzugsweise aus SiOₓ, die die ohnehin guten lichttechnischen Eigenschaften, sowie die Beständigkeit weiter verbessert.

## Patentansprüche

1. Mit einer Wärmeschutzschicht beschichtetes Substrat, wobei auf dem Substrat (2) ein Schichtsystem aufgebracht ist, mit zumindest
einer dielektrischen Unterschicht (4), die zumindest zwei unterschiedliche Lagen (4', 4'') enthält, wobei die Lagen (4', 4'') jeweils aus einem Oxid oder Nitrid eines unterschiedlichen Metalls oder Halbleiters bestehen, einer metallischen Schicht (3),
einer dielektrischen Oberschicht (5, 6) , welche zumindest eine Lage (5, 6) enthält, deren wesentlicher Bestandteil Zinkoxynitrid ist, oder welche zumindest eine erste Lage (6'), deren wesentlicher Bestandteil Zinkoxyd oder Zinkoxynitrid ist, und eine zweite Lage (6'')
enthält, deren wesentlicher Bestandteil Zinkstannat ist, die eine Dicke von 10 nm bis 70 nm in dem Fall aufweist, dass die erste Lage (6') als wesentlichen Bestandteil Zinkoxid aufweist, wobei der Brechungsindex der dielektrischen Unterschicht (4) höher ist als der Brechungsindex der dielektrischen Oberschicht (5,6).

2. Mit einer Wärmeschutzschicht beschichtetes Substrat nach Anspruch 1,
**dadurch gekennzeichnet,**
**daß** zumindest eine der Lagen (4'') der dielektrischen Unterschicht (4) als wesentlichen Bestandteil Zinkoxid enthält.

3. Mit einer Wärmeschutzschicht beschichtetes Substrat nach Anspruch 2,
**dadurch gekennzeichnet,**
**daß** die Lage (4''), deren wesentlicher Bestandteil Zinkoxid ist, an die metallische Schicht (3) angrenzt.

4. Mit einer Wärmeschutzschicht beschichtetes Substrat nach Anspruch 2 oder 3
**dadurch gekennzeichnet,**
**daß** die Lage (4''), deren wesentlicher Bestandteil Zinkoxid ist, eine Dicke von 1nm bis 15nm, bevorzugt eine Dicke von 4nm bis 11nm, besonders bevorzugt eine Dicke von 5nm bis 8nm aufweist.

5. Mit einer Wärmeschutzschicht beschichtetes Substrat nach einem der Ansprüche 1 bis 4,
**dadurch gekennzeichnet,**
**daß** die dielektrische Schicht (4) eine Lage (4') aufweist, die als einen wesentlichen Bestandteil Wismutoxid oder Wolframoxid enthält.

6. Mit einer Wärmeschutzschicht beschichtetes Substrat nach Anspruch 5,
**dadurch gekennzeichnet,**
**daß** die Lage (4'), deren wesentlicher Bestandteil Wismutoxid oder Wolframoxid ist, eine Dicke von 5nm bis 50nm, bevorzugt eine Dicke von 10nm bis 40nm, besonders bevorzugt eine Dicke von 15nm bis 25nm aufweist.

7. Mit einer Wärmeschutzschicht beschichtetes Substrat nach einem der Ansprüche 1 bis 6,
**dadurch gekennzeichnet,**
**daß** die Lage (5) mit wesentlichem Bestandteil Zinkoxynitrid eine Dicke von 10nm bis 70nm, bevorzugt eine Dicke von 20nm bis 60nm, besonders bevorzugt eine Dicke von 30nm bis 50nm aufweist.

8. Mit einer Wärmeschutzschicht beschichtetes Substrat nach einem der Ansprüche 1 bis 7,
**dadurch gekennzeichnet,**
**daß** die Lage mit wesentlichem Bestandteil Zinkoxid die von dem Substrat (2) aus betrachtet erste Lage (6') der Oberschicht (6) ist.

9. Mit einer Wärmeschutzschicht beschichtetes Substrat nach einem der Ansprüche 1 bis 8,
**dadurch gekennzeichnet,**
**daß** zwischen der metallischen Schicht (3) und der dielektrischen Oberschicht (6) eine Haftschicht (7) (Primer) aufgebracht ist.

10. Mit einer Wärmeschutzschicht beschichtetes Substrat nach Anspruch 9,
**dadurch gekennzeichnet,**
**daß** die Haftschicht (7) (Primer) als wesentlichen Bestandteil Titanoxid enthält.

11. Mit einer Wärmeschutzschicht beschichtetes Substrat nach einem der Ansprüche 1 bis 10,
**dadurch gekennzeichnet,**
**daß** das beschichtete Substrat (2) eine Emissivität ε von kleiner gleich 0,06 und eine Transmission τ_{L} von mehr als 88% für Licht im sichtbaren Bereich aufweist.

12. Mit einer Wärmeschutzschicht beschichtetes Substrat nach einem der Ansprüche 1 bis 11,
**dadurch gekennzeichnet,**
**daß** das beschichtete Substrat (2) einen Farbwiedergabeindex von R_{a,D} ≥ 97 und R_{a,R} ≥ 97 aufweist.

13. Mit einer Wärmeschutzschicht beschichtetes Substrat nach einem der Ansprüche 1 bis 12,
**dadurch gekennzeichnet,**
**daß** das Schichtsystem auf einem Flachglas als Substrat (2) aufgebracht ist.

14. Wärmeschutzverglasung bestehend aus zumindest zwei zueinander parallel angeordneten Substraten (10, 11),
**dadurch gekennzeichnet,**
**daß** zumindest eines der beiden Substrate (10) ein mit einer Wäremschutzschicht (12) beschichtetes Substrat nach einem der Ansprüche 1 bis 15 ist.

15. Verfahren zur Herstellung eines Wärmeschutzschichtsystems auf einem Substrat (2) nach Ausprüch 1 mit folgenden Verfahrenschritten:
- Aufsputtern einer dielektrischen Unterschicht (4)auf dem Substrat (2), wobei die Unterschicht (4) durch zumindest zwei nacheinander aufgesputterte Lagen (4', 4'') gebildet wird und bei dem Aufsputtern für die zumindest zwei Lagen (4', 4'') unterschiedliche Metall- oder Halbleitertargets verwendet werden;
- Aufsputtern einer metallischen Schicht (3);
- Aufsputtern einer dielektrischen Oberschicht (5, 6), die zumindest eine Lage (5) Zinkoxynitrid oder zumindest eine Lage (6') Zinkoxid oder Zinkoxynitrid und eine Lage (6'') Zinkstannat als wesentliche Bestandteile enthält.

16. Verfahren nach Anspruch 15,
**dadurch gekennzeichnet,**
**daß** beim Aufsputtern derjenigen Lage (4'') der Unterschicht (4), die als wesentlichen Bestandteil Zinkoxid enthält, eine Legierung aus Zink und Aluminium verwendet wird.

17. Verfahren nach Anspruch 15,
**dadurch gekennzeichnet, daß** beim Aufsputtern derjenigen Lage (4'') der Unterschicht (4), die als wesentlichen Bestandteil Zinkoxid enthält, ein Mischtarget aus Oxiden von Zink und einer Dotierung verwendet wird.

18. Verfahren nach einem der Ansprüche 15 bis 17,
**dadurch gekennzeichnet,**
**daß** unmittelbar auf die metallische Schicht (3) eine Haftschicht (7) (Primer) aufgesputtert wird, die Titanoxid enthält.

## Claims

1. Substrate coated with a thermal-protection layer, a laminated system being applied on the substrate (2), with at least
a dielectric bottom layer (4) which includes at least two different laminations (4', 4''), the laminations (4', 4'') each consisting of an oxide or nitride of a different metal or semiconductor,
a metallic layer (3),
a dielectric top layer (5, 6) which includes at least one lamination (5, 6), the essential component of which is zinc oxynitride, or which includes at least one first lamination (6'), the essential component of which is zinc oxide or zinc oxynitride, and a second lamination (6''), the essential component of which is zinc stannate, which exhibits a thickness from 10 nm to 70 nm in the case where the first lamination (6') exhibits zinc oxide as essential component, the refractive index of the dielectric bottom layer being higher than the refractive index of the dielectric top layer (5, 6).

2. Substrate coated with a thermal-protection layer, according to Claim 1,
**characterised in that**
at least one of the laminations (4'') of the dielectric bottom layer (4) contains zinc oxide as essential component.

3. Substrate coated with a thermal-protection layer, according to Claim 2,
**characterised in that**
the lamination (4''), the essential component of which is zinc oxide, borders the metallic layer (3).

4. Substrate coated with a thermal-protection layer, according to Claim 2 or 3,
**characterised in that**
the lamination (4''), the essential component of which is zinc oxide, exhibits a thickness from 1 nm to 15 nm, preferably a thickness from 4 nm to 11 nm, particularly preferably a thickness from 5 nm to 8 nm.

5. Substrate coated with a thermal-protection layer, according to one of Claims 1 to 4,
**characterised in that**
the dielectric layer (4) exhibits a lamination (4') which contains bismuth oxide or tungsten oxide as an essential component.

6. Substrate coated with a thermal-protection layer, according to Claim 5,
**characterised in that**
the lamination (4'), the essential component of which is bismuth oxide or tungsten oxide, exhibits a thickness from 5 nm to 50 nm, preferably a thickness from 10 nm to 40 nm, particularly preferably a thickness from 15 nm to 25 nm.

7. Substrate coated with a thermal-protection layer, according to one of Claims 1 to 6,
**characterised in that**
the lamination (5) with essential component zinc oxynitride exhibits a thickness from 10 nm to 70 nm, preferably a thickness from 20 nm to 60 nm, particularly preferably a thickness from 30 nm to 50 nm.

8. Substrate coated with a thermal-protection layer, according to one of Claims 1 to 7,
**characterised in that**
the lamination with essential component zinc oxide is the first lamination (6') of the top layer (6), viewed from the substrate (2).

9. Substrate coated with a thermal-protection layer, according to one of Claims 1 to 8,
**characterised in that**
a bonding layer (7) (primer) is applied between the metallic layer (3) and the dielectric top layer (6).

10. Substrate coated with a thermal-protection layer, according to Claim 9,
**characterised in that**
the bonding layer (7) (primer) contains titanium oxide as essential component.

11. Substrate coated with a thermal-protection layer, according to one of Claims 1 to 10,
**characterised in that**
the coated substrate (2) exhibits an emissivity ε of less than or equal to 0.06 and a transmission τ_{L} of more than 88 % for light in the visible range.

12. Substrate coated with a thermal-protection layer, according to one of Claims 1 to 11,
**characterised in that**
the coated substrate (2) exhibits a colour-rendering index of R_{s,D} ≥ 97 and R_{s,R} ≥ 97.

13. Substrate coated with a thermal-protection layer, according to one of Claims 1 to 12,
**characterised in that**
the laminated system is applied on a flat glass by way of substrate (2).

14. Thermal-protection glazing consisting of at least two substrates (10, 11) arranged parallel to one another,
**characterised in that**
at least one of the two substrates (10) is a substrate coated with a thermal-protection layer (12), according to one of Claims 1 to 15.

15. Process for producing a thermal-protection laminated system on a substrate (2) according to Claim 1, having the following process steps:
- sputtering a dielectric bottom layer (4) on the substrate (2), the bottom layer (4) being formed by at least two laminations (4', 4'') applied in succession by sputtering, and different metal or semiconductor targets being used in the course of the application by sputtering for the at least two laminations (4', 4'');
- applying a metallic layer (3) by sputtering;
- applying a dielectric top layer (5, 6) by sputtering which contains at least one lamination (5) of zinc oxynitride or at least one lamination (6') of zinc oxide or zinc oxynitride and a lamination (6'') of zinc stannate as essential components.

16. Process according to Claim 15,
**characterised in that**
use is made of an alloy consisting of zinc and aluminium in the course of the application by sputtering of the lamination (4'') of the bottom layer (4) which contains zinc oxide as essential component.

17. Process according to Claim 15,
**characterised in that**
use is made of a mixed target consisting of oxides of zinc and a doping agent in the course of the application by sputtering of the lamination (4'') of the bottom layer (4) which contains zinc oxide as essential component.

18. Process according to one of Claims 15 to 17,
**characterised in that**
a bonding layer (7) (primer) which contains titanium oxide is sputtered directly onto the metallic layer (3).

## Revendications

1. Substrat recouvert d'une couche de protection thermique, un système de couche étant appliqué sur le substrat (2), avec au moins
une couche inférieure diélectrique (4), qui comprend au moins deux couches différentes (4', 4"), les couches (4', 4") se composant respectivement d'un oxyde ou d'un nitrure d'un métal différent ou d'un semi-conducteur,
une couche métallique (3),
une couche supérieure diélectrique (5, 6), laquelle comprend au moins une couche (5, 6) dont le composant principal est l'oxynitrure de zinc, ou laquelle comprend au moins une première couche (6'), dont le composant principal est l'oxyde de zinc ou l'oxynitrure de zinc, et une seconde couche (6"), dont le composant principal est le stannate de zinc, qui présente une épaisseur allant de 10 nm à 70 nm dans le cas où la première couche (6') présente de l'oxyde de zinc en tant que composant principal, l'indice de réfraction de la couche inférieure diélectrique (4) étant plus élevé que l'indice de réfraction de la couche supérieure diélectrique (5, 6).

2. Substrat recouvert d'une couche de protection thermique selon la revendication 1,
**caractérisé en ce**
**qu'**au moins l'une des couches (4") de la couche inférieure diélectrique (4) comprend de l'oxyde de zinc en tant que composant principal.

3. Substrat recouvert d'une couche de protection thermique selon la revendication 2,
**caractérisé en ce**
**que** la couche (4"), dont le composant principal est l'oxyde de zinc, est contiguë à la couche métallique (3).

4. Substrat recouvert d'une couche de protection thermique selon la revendication 2 ou 3,
**caractérisé en ce**
**que** la couche (4"), dont le composant principal est l'oxyde de zinc, présente une épaisseur allant de 1 nm à 15 nm, de préférence une épaisseur allant de 4 nm à 11 nm, de manière particulièrement préférée une épaisseur allant de 5 nm à 8 nm.

5. Substrat recouvert d'une couche de protection thermique selon l'une quelconque
des revendications 1 à 4,
**caractérisé en ce**
**que** la couche diélectrique (4) présente une couche (4'), qui comporte de l'oxyde de bismuth ou de l'oxyde de tungstène en tant que composant principal.

6. Substrat recouvert d'une couche de protection thermique selon la revendication 5,
**caractérisé en ce**
**que** la couche (4'), dont le composant principal est l'oxyde de bismuth ou l'oxyde de tungstène, présente une épaisseur allant de 5 nm à 50 nm, de préférence une épaisseur allant de 10 nm à 40 nm, de manière particulièrement préférée une épaisseur allant de 15 nm à 25 nm.

7. Substrat recouvert d'une couche de protection thermique selon l'une quelconque des revendications 1 à 6,
**caractérisé en ce**
**que** la couche (5) avec le composant principal d'oxynitrure de zinc présente une épaisseur allant de 10 nm à 70 nm, de préférence une épaisseur allant de 20 nm à 60 nm, de manière particulièrement préférée une épaisseur allant de 30 nm à 50 nm.

8. Substrat recouvert d'une couche de protection thermique selon l'une quelconque des revendications 1 à 7,
**caractérisé en ce**
**que** la couche avec le composant principal d'oxyde de zinc est la première couche (6') de la couche supérieure (6) observée depuis le substrat (2).

9. Substrat recouvert d'une couche de protection thermique selon l'une quelconque des revendications 1 à 8,
**caractérisé en ce**
**qu'**une couche adhésive (7) (Primer) est appliquée entre la couche métallique (3) et la couche supérieure diélectrique (6).

10. Substrat recouvert d'une couche de protection thermique selon la revendication 9,
**caractérisé en ce**
**que** la couche adhésive (7) (Primer) comprend de l'oxyde de titane en tant que composant principal.

11. Substrat recouvert d'une couche de protection thermique selon l'une quelconque des revendications 1 à 10,
**caractérisé en ce**
**que** le substrat recouvert (2) présente une émissivité ε inférieure ou égale à 0,06 et une transmission τ_{L} supérieure à 88 % pour la lumière dans le domaine visible.

12. Substrat recouvert d'une couche de protection thermique selon l'une quelconque des revendications 1 à 11,
**caractérisé en ce**
**que** le substrat recouvert (2) présente un indice de rendu des couleurs de R_{a,D} ≥ 97 et R_{a,R} ≥ 97.

13. Substrat recouvert d'une couche de protection thermique selon l'une quelconque des revendications 1 à 12,
**caractérisé en ce**
**que** le système de couche est appliqué sur un verre plat en tant que substrat (2).

14. Vitrage de protection thermique se composant d'au moins deux substrats (10, 11) disposés parallèlement l'un par rapport à l'autre,
**caractérisé en ce**
**qu'**au moins l'un des deux substrats (10) est un substrat recouvert d'une couche d'isolation thermique (12) selon l'une quelconque des revendications 1 à 15.

15. Procédé de fabrication d'un système de couche de protection thermique sur un substrat (2) selon la revendication 1, avec les étapes de procédé consistant à :
- pulvériser une couche inférieure diélectrique (4) sur le substrat (2), la couche inférieure (4) étant formée par au moins deux couches (4', 4") pulvérisées l'une après l'autre et, lors de la pulvérisation, différentes cibles métalliques ou semiconductrices étant utilisées pour les couches (4', 4") au moins au nombre de deux ;
- pulvériser une couche métallique (3) ;
- pulvériser une couche supérieure diélectrique (5, 6), qui comprend au moins une couche (5) d'oxynitrure de zinc ou au moins une couche (6') d'oxyde de zinc ou d'oxynitrure de zinc et une couche (6") de stannate de zinc en tant que composants essentiels.

16. Procédé selon la revendication 15,
**caractérisé en ce**
**qu'**un alliage de zinc et d'aluminium est utilisé lors de la pulvérisation de la couche (4") de la couche inférieure (4), qui comprend de l'oxyde de zinc en tant que composant essentiel.

17. Procédé selon la revendication 15,
**caractérisé en ce**
**qu'**une cible mélangée constituée d'oxydes de zinc et d'un dopage est utilisée lors de la pulvérisation de la couche (4") de la couche inférieure (4) qui comprend de l'oxyde de zinc en tant que composant essentiel.

18. Procédé selon l'une quelconque des revendications 15 à 17,
**caractérisé en ce**
**qu'**une couche adhésive (7) (Primer), qui comprend de l'oxyde de titane, est pulvérisée directement sur la couche métallique (3).
